# EUROPÄISCHE PATENTSCHRIFT

(11) **EP 1 912 834 B1**
(45) Veröffentlichungstag und Bekanntmachung des Hinweises auf die Patenterteilung: **16.09.2009**
(21) Anmeldenummer: 06792526.3
(22) Anmeldetag: 19.07.2006
(51) Int. Cl.: B60S 1/24

(54) **SCHEIBENWISCHVORRICHTUNG**
WINDOW WIPING DEVICE
DISPOSITIF ESSUIE-GLACE

(30) Priorität: 01.08.2005 DE 102005036043
(43) Veröffentlichungstag der Anmeldung: 23.04.2008
(73) Patentinhaber: Robert Bosch GmbH, 70442 Stuttgart (DE)
(72) Erfinder: LAUK, Detlef, 77871 Renchen (DE); HAWIGHORST, Achim, 77830 Buehlertal (DE)
(86) Internationale Anmeldenummer: PCT/EP2006/064423
(87) Internationale Veröffentlichungsnummer: WO 2007/014859

(56) Entgegenhaltungen:
- EP-A1- 0 776 803
- DE-A1- 4 322 297
- FR-A1- 2 679 304

## Beschreibung

Die Erfindung betrifft eine Scheibenwischvorrichtung, insbesondere für ein Kraftfahrzeug, mit einer auf eine Abtriebswelle montierten Kurbel.

Bei den aus dem Stand der Technik bekannten Scheibenwischvorrichtungen wird die Kurbel mit der Abtriebswelle verschraubt. Für die Verschraubung ist jedoch ein bestimmter Bauraum erforderlich. Da der zur Verfügung stehende Bauraum heutzutage immer enger wird, wird es auch problematischer den für die Scheibenwischvorrichtung erforderlichen Platz zur Verfügung zu stellen. Die Verschraubung erfordert außerdem einen gewissen Material- und Montageaufwand.

Dokument FR-A-2679304 offenbart eine Scheibenwischvorrichtung gemäß dem ersten Teil des Anspruchs 1.

Die Erfindung hat die Aufgabe, eine Scheibenwischvorrichtung der eingangs genannten Art dahingehend zu verbessern, dass zukünftig der erforderliche Bauraum, der Material- und Montageaufwand reduziert werden.

Die Erfindung löst die gestellte Aufgabe durch eine Scheibenwischvorrichtung der eingangs genannten Art, bei der erfindungsgemäß die Abtriebswelle einen über die Kurbel überstehenden und an die Kurbel anlegbaren Bereich aufweist. Wenn der überstehende Bereich nach Abschluss der Montagearbeiten an die Kurbel angelegt ist, weist die Scheibenwischvorrichtung einen deutlich geringeren Bauraum auf als bisher, als die Kurbel mit der Abtriebswelle verschraubt wurde. Nach dem Anlegen des überstehenden Bereichs weist dieser nur noch einen Bruchteil des Bauraums der Verschraubung auf. Außerdem geschieht das Anlegen deutlich schneller als das Verschrauben der Kurbel mit der Abtriebswelle. Das Anfertigen von Gewinden an der Abtriebswelle und die Mutter können zukünftig entfallen.

Besonders schnell und kostengünstig kann der anlegbare Bereich der Abtriebswelle durch Umbördeln an die Kurbel angelegt werden. Das Umbördeln kann beispielsweise durch ein automatisierbares Taumel- oder Rollierverfahren geschehen, wodurch eine kraftschlüssige Verbindung erzeugt wird.

Wenn der anlegbare Bereich eine Bohrung aufweist, sind zum Anlegen des überstehenden Bereichs an die Kurbel nur äußerst geringe Widerlagerkräfte erforderlich, so dass das Anlegen sogar bei einem an das Kraftfahrzeug montierten Wischergetriebe möglich ist. Öffnungen im Gehäuse des Wischergetriebes zur Aufnahme eines Widerlagers für den Umbördelvorgang sind somit nicht erforderlich, so dass auch eine Abdichtung solcher Öffnungen entfällt mal.

Die Bohrung kann konisch ausgeführt sein, wobei sie sich zum Bohrungsgrund verjüngt. Dadurch ist die Wandung der Abtriebswelle im oberen Bereich der Bohrung dünner als im unteren Bereich der Bohrung, so dass die Widerlagerkräfte zum Anlegen des überstehenden Bereiches an die Kurbel noch weiter reduziert werden können.

Die Abtriebswelle kann an ihrem mit der Kurbel montierbaren Ende einen Außenkonus aufweisen. Dadurch werden die Kurbel und die Abtriebswelle beim Anlegen des überstehenden Bereiches an die Kurbel fest gegeneinander gepresst, wodurch eine kraftschlüssige Verbindung erzeugt wird. Ferner bedingt der Außenkonus eine geringere Kraft zum Umbördeln, da der überstehende Bereich aufgrund des Konusses eine geringere Materialstärke aufweist.

Wenn der Konus der Bohrung eine größere Steigung aufweist als der Außenkonus der Abtriebswelle, dann wird verhindert, dass der überstehende Bereich beim Anlegen zum Bohrungsinneren hin umgelegt wird. Stattdessen wird ein definiertes Anlegen des überstehenden Bereiches an die Kurbel gewährleistet, was insbesondere beim automatisierten Anlegen sehr vorteilhaft ist.

Zwischen der Kurbel und der Abtriebswelle wird neben einer kraftschlüssigen auch eine formschlüssige Verbindung erzielt, wenn der Außenkonus mit einer Rändelung versehen ist. Beim Anlegen des überstehenden Bereiches an die Kurbel wird die Rändelung in die Kurbel eingepresst, wodurch der Formschluss entsteht.

Zweckmäßigerweise ist die Abtriebswelle aus Stahl oder aus einem anderen umbördelbaren Material gefertigt.

Nachfolgend wird ein Ausführungsbeispiel der erfindungsgemäßen Scheibenwischvorrichtung anhand der beiliegenden Zeichnungen näher erläutert.

Im Einzelnen zeigen:
- Fig. 1: eine Schnittansicht durch die Scheibenwischvorrichtung;
- Fig. 2: eine Schnittansicht durch die Abtriebswelle und die Kurbel vor dem Anlegen des überstehenden Bereiches;
- Fig. 3: eine Schnittansicht durch die Abtriebswelle und die Kurbel nach dem Anlegen des überstehenden Bereiches.

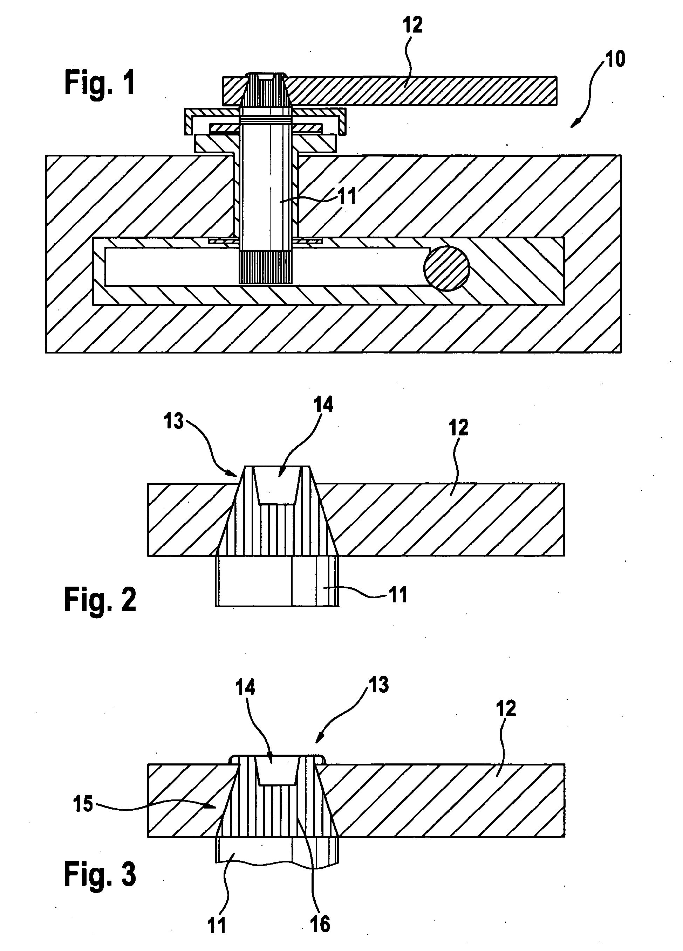

Fig. 1 zeigt eine Scheibenwischvorrichtung 10 mit einer Abtriebswelle 11, auf der eine Kurbel 12 montiert ist.

Die Fig. 2 zeigt die Abtriebswelle 11 und die Kurbel 12, nach dem die Abtriebswelle 11 durch eine Öffnung in der Kurbel 12 gesteckt wurde. Die Abtriebswelle 11 weist einen über die Kurbel 12 überstehenden Bereich 13 auf.

Fig. 3 zeigt den überstehenden Bereich 13, nach dem dieser an die Kurbel 12 angelegt wurde. Durch das Anlegen des überstehenden Bereiches 13 können zukünftig Verschraubungen entfallen, wodurch der für die Scheibenwischvorrichtung 10 benötigte Bauraum reduziert wird. Dadurch, dass zukünftig Schrauben und Muttern ebenso wie die Anfertigung von Gewinden entfallen können, kann die Scheibenwischvorrichtung 10 preiswerter gefertigt und montiert werden.

Das Anlegen des überstehenden Bereiches 13 kann durch Umbördeln, wie beispielsweise durch ein Taumel- oder Rollierverfahren geschehen.

Die Abtriebswelle 11 ist mit einer Bohrung 14 versehen, wobei die Bohrung 14 konisch ausgeführt ist. Durch die Bohrung 14, insbesondere durch deren konische Ausführung, sind zum Anlegen des überstehenden Bereiches 13 an die Kurbel 12 nur sehr geringe Widerlagerkräfte erforderlich, so dass das Anlegen sogar bei einem an ein Kraftfahrzeug montierten Wischergetriebe möglich ist. Außerdem dient die Bohrung zur Zentrierung eines Werkzeugs, das zum Umbördeln des überstehenden Bereiches benötigt wird.

Die Abtriebswelle 11 weist in ihrem oberen Bereich einen Außenkonus 15 auf (siehe Fig. 3). Durch den Außenkonus 15 werden die Kurbel 12 und die Abtriebswelle 11 beim Anlegen des überstehenden Bereiches 13 fest gegeneinander gepresst.

Wenn der Innenkonus der Bohrung 14 eine größere Steigung aufweist als der Außenkonus 15 (siehe Fig. 3), dann wird sichergestellt, dass sich der überstehende Bereich 13 beim Umbördeln nach außen auf die Kurbel 12 anlegt.

Der Außenkonus 15 ist mit einer Rändelung 16 versehen, die sich beim Anlegen des Bereiches 13 in die Kurbel 12 einpresst, wodurch ein Formschluss entsteht.

## Patentansprüche

1. Scheibenwischvorrichtung (10), insbesondere für ein Kraftfahrzeug, mit einer auf eine Abtriebswelle (11) montierten Kurbel (12), wobei die Antriebswelle (11) einen über die Kurbel (12) überstehenden Bereich aufweist, **dadurch gekennzeichnet, dass** dieser Bereich (13) an die Kurbel (12) angelegt ist.

2. Scheibenwischvorrichtung (10) nach Anspruch 1, **dadurch gekennzeichnet, dass** der angelegte Bereich (13) umbördelbar ist.

3. Scheibenwischvorrichtung (10) nach Anspruch 1 oder 2, **dadurch gekennzeichnet, dass** der angelegte Bereich (13) eine Bohrung (14) aufweist.

4. Scheibenwischvorrichtung (10) nach Anspruch 3, **dadurch gekennzeichnet, dass** die Bohrung (14) konisch ist, wobei sie sich zum Bohrungsgrund verjüngt.

5. Scheibenwischvorrichtung (10) nach einem der Ansprüche 1 bis 4, **dadurch gekennzeichnet, dass** die Abtriebswelle (11) an ihrem mit der Kurbel (12) montierbaren Ende einen Außenkonus (15) aufweist.

6. Scheibenwischvorrichtung (10) nach Anspruch 4 oder 5, **dadurch gekennzeichnet, dass** der Konus der Bohrung (14) eine größere Steigung aufweist als der Außenkonus (15) der Abtriebswelle (11).

7. Scheibenwischvorrichtung (10) nach Anspruch 5 oder 6, **dadurch gekennzeichnet, dass** der Außenkonus (15) mit einer Rändelung (16) versehen ist.

8. Scheibenwischvorrichtung (10) nach einem der Ansprüche 1 bis 7, **dadurch gekennzeichnet, dass** die Abtriebswelle (11) aus Stahl oder einem anderen umbördelbaren Material gefertigt ist.

## Claims

1. Window wiping device (10), in particular for a motor vehicle, with a crank (12) fitted onto an output shaft (11), wherein the output shaft (11) has a region protruding over the crank (12), **characterized in that** said region (13) is placed onto the crank (12).

2. Window wiping device (10) according to Claim 1, **characterized in that** the placed-on region (13) can be flanged.

3. Window wiping device (10) according to Claim 1 or 2, **characterized in that** the placed-on region (13) has a bore (14).

4. Window wiping device (10) according to Claim 3, **characterized in that** the bore (14) is conical, tapering towards the bottom.

5. Window wiping device (10) according to one of Claims 1 to 4, **characterized in that** the output shaft (11) has an external cone (15) at its end which can be fitted to the crank (12).

6. Window wiping device (10) according to Claim 4 or 5, **characterized in that** the cone of the bore (14) has a greater slope than the external cone (15) of the output shaft (11).

7. Window wiping device (10) according to Claim 5 or 6, **characterized in that** the external cone (15) is provided with a knurl (16).

8. Window wiping device (10) according to one of Claims 1 to 7, **characterized in that** the output shaft (11) is manufactured from steel or from another material which can be flanged.

## Revendications

1. Dispositif d'essuie-glace (10), en particulier pour un véhicule automobile, comprenant une manivelle (12) montée sur un arbre de sortie (11), l'arbre de sortie (11) présentant une région saillant au-delà de la manivelle (12), **caractérisé en ce que** cette région (13) est appliquée contre la manivelle (12).

2. Dispositif d'essuie-glace (10) selon la revendication 1, **caractérisé en ce que** la région appliquée (13) peut être rabattue.

3. Dispositif d'essuie-glace (10) selon la revendication 1 ou 2, **caractérisé en ce que** la région appliquée (13) présente un alésage (14).

4. Dispositif d'essuie-glace (10) selon la revendication 3, **caractérisé en ce que** l'alésage (14) est conique, et se rétrécit jusqu'au fond de l'alésage.

5. Dispositif d'essuie-glace (10) selon l'une quelconque des revendications 1 à 4, **caractérisé en ce que** l'arbre de sortie (11) présente à son extrémité pouvant être montée avec la manivelle (12), un cône extérieur (15).

6. Dispositif d'essuie-glace (10) selon la revendication 4 ou 5, **caractérisé en ce que** le cône de l'alésage (14) présente une pente plus raide que le cône extérieur (15) de l'arbre de sortie (11).

7. Dispositif d'essuie-glace (10) selon la revendication 5 ou 6, **caractérisé en ce que** le cône extérieur (15) est pourvu d'un rabat (16).

8. Dispositif d'essuie-glace (10) selon l'une quelconque des revendications 1 à 7, **caractérisé en ce que** l'arbre de sortie (11) est fabriqué en acier ou en un autre matériau rabattable.
